# FASCICULE DE BREVET EUROPEEN

(11) **EP 0 501 079 B1**
(45) Date de publication et mention de la délivrance du brevet: **22.06.1994**
(21) Numéro de dépôt: 91403478.0
(22) Date de dépôt: 20.12.1991
(51) Int. Cl.: F16D 65/22

(54) **Mécanisme d'actionnement par coin d'un frein**
Spreizkeilbetätigungsvorrichtung für eine Bremse
Wedge actuator for a brake

(30) Priorité: 28.02.1991 FR 9102392
(43) Date de publication de la demande: 02.09.1992
(73) Titulaire: ALLIEDSIGNAL EUROPE SERVICES TECHNIQUES, 93700 Drancy (FR)
(72) Inventeur: Monteiller, J.C., F-93700 Drancy (FR)
(74) Mandataire: Bentz, Jean-Paul

(56) Documents cités:
- DE-A- 1 450 098
- FR-A- 1 466 732
- FR-A- 2 629 161

## Description

La présente invention concerne les mécanismes d'actionnement par coin d'un frein de véhicules automobiles.

Les mécanismes d'actionnement par coin sont bien connus de l'homme du métier. Les documents FR-A-2629161 et DE-A-1450098 en décrivent certains aspects.

Ces mécanismes comportent dans un corps une cage portant au moins deux rouleaux disposés parallèlement de manière à être écartés l'un de l'autre sous l'action d'un coin introduit entre eux au moyen d'une tige de poussée solidaire du coin.

L'écartement des rouleaux a pour effet d'écarter l'une de l'autre, par exemple, deux parties en vue d'appliquer des garnitures de friction sur une pièce tournante, disque ou tambour.

Du fait de la course relative de ces deux parties, l'ensemble coin-rouleaux peut être amené à s'incliner dans le corps par rapport à l'axe d'application de la force à la tige de poussée. Cette inclinaison doit pouvoir se faire, mais lors du retrait de la force, au défreinage, l'ensemble doit reprendre automatiquement une position axiale centrée déterminée au repos.

Dans ce but, selon le document FR-A-1466732, des bras en forme de coussinet sont ménagés en saillie de la cage, tandis que l'autre extrémité de la cage affecte une forme trapézoïdale tendant à recentrer l'ensemble par coopération avec des sièges ménagés dans le corps.

Cette solution, bien que non satisfaisante dans tous les cas, est coûteuse et fragile.

La présente invention a pour objet un mécanisme permettant à l'ensemble coin-rouleaux d'être automatiquement recentré lors de son retour en position de repos.

Selon l'invention, le mécanisme d'actionnement comporte, montée sur la tige de poussée, une bague flottante centrée de manière élastique par rapport au corps du mécanisme.

L'invention sera mieux comprise et d'autres buts, avantages et caractéristiques de celle-ci apparaîtront plus clairement à la lecture de la description qui suit d'un mode de réalisation donné à titre non limitatif et à laquelle une planche de dessin est jointe sur laquelle :

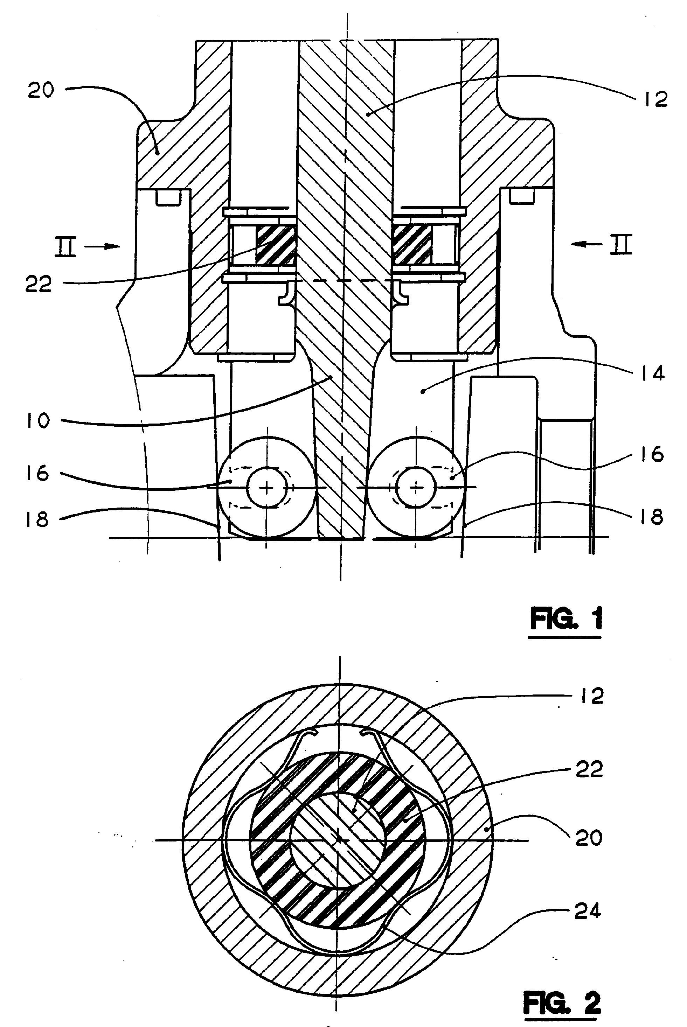

- La figure 1 représente schématiquement en coupe axiale un mécanisme conforme à l'invention, et
- La figure 2 représente schématiquement en coupe radiale selon la ligne II-II le mécanisme de la figure 1.

En référence maintenant aux figures, l'homme du métier reconnaîtra un coin 10 mû à l'aide d'une tige de poussée 12. Une cage 14 maintient les rouleaux 16 en position en regard des surfaces de roulement en pente 18.

Comme cela est bien connu, l'introduction du coin 10 entre les rouleaux 16 a pour effet d'écarter les rouleaux et, par suite, les surfaces de roulement 18 l'une par rapport à l'autre.

Au défreinage, c'est-à-dire lorsque le coin 10 se retire pour reprendre sa position initiale, la tige 12 doit être correctement positionnée dans le corps 20 même si elle s'était inclinée lors du freinage.

Dans ce but, une bague 22 est montée flottante sur la tige 12. Un moyen élastique, tel un ressort 24, est disposé entre la paroi intérieure du corps 20 et la paroi extérieure de la bague 22 de manière à assurer le centrage au repos.

Ce ressort 24 est favorablement constitué par un fil ou une lame affectant une forme générale ondulée entre les susdites parois. Le ressort 24 peut d'une façon également avantageuse être constitué de plusieurs éléments de ressorts, indépendants, et diamétralement opposés, ayant également une forme générale ondulée, de façon à être chacun en contact avec la paroi extérieure de la bague et la paroi intérieure du corps.

La bague n'étant pas soumise à des efforts importants, elle peut être réalisée dans un matériau plastique commun.

Bien que seul un mode de réalisation ait été représenté et décrit, il est évident que l'homme du métier pourra apporter à l'invention de nombreuses modifications sans pour autant sortir du cadre défini selon les revendications.

## Revendications

1. Mécanisme d'actionnement par coin d'un frein de véhicule automobile, ledit mécanisme comportant dans un corps (20) une cage (14) portant au moins deux rouleaux (16) disposés parallèlement de manière à être écartés sous l'action d'un coin (10) introduit entre eux au moyen d'une tige de poussée (12) solidaire dudit coin (10) caractérisé en ce qu'il comporte, montée sur ladite tige de poussée, une bague flottante (22) centrée de manière élastique par rapport audit corps (20).

2. Mécanisme selon la revendication 1 caractérisé en ce que ladite bague (22) est en matériau plastique.

3. Mécanisme selon les revendications 1 ou 2 caractérisé en ce que le centrage est assuré au moyen d'un ressort (24).

4. Mécanisme selon la revendication 3 caractérisé en ce que le ressort (24) est constitué par un fil ou une lame métallique affectant une forme générale ondulée allant d'une paroi extérieure de ladite bague (22) à la paroi intérieure dudit corps (20).

5. Mécanisme selon les revendications 1 ou 2, caractérisé en ce que le centrage est assuré au moyen de plusieurs ressorts (24) constitués chacun par un fil ou une lame métallique affectant une forme générale ondulée allant d'une paroi extérieure de ladite bague (22) à la paroi intérieure dudit corps (20).

## Claims

1. Mechanism for the wedge actuation of a motor-vehicle brake, said mechanism comprising, in a body (20), a cage (14) carrying at least two rollers (16) arranged in parallel in such a way as to be spaced apart under the action of a wedge (10) introduced between them by means of a push rod (12) integral with said wedge (10), characterized in that it comprises, mounted on said push rod, a floating ring (22) centered elastically in relation to said body (20).

2. Mechanism according to claim 1, characterized in that said ring (22) is made of plastic.

3. Mechanism according to claims 1 or 2, characterized in that the centering is obtained by means of a spring (24).

4. Mechanism according to claim 3, characterized in that the spring (24) consists of a metal wire or leaf assuming a general corrugated shape extending from an outer wall of said ring (22) to the inner wall of said body (20).

5. Mechanism according to claims 1 or 2, characterized in that the centering is obtained by means of a plurality of springs (24), each consisting of a metal wire or leaf assuming a general corrugated shape extending from an outer wall of said ring (22) to the inner wall of said body (20).

## Patentansprüche

1. Spreizkeilbetätigungsvorrichtung für die Bremse eines Kraftfahrzeugs, wobei die Vorrichtung in einem Körper (20) einen Käfig (14) aufweist, der wenigstens zwei Walzen (16) aufweist, die parallel so angeordnet sind, daß sie unter der Wirkung eines Keils (10), der mittels einer mit dem Keil (10) fest verbundenen Schubstange (12) zwischen sie eingeführt ist, abgespreizt werden, dadurch gekennzeichnet, daß sie an der Schubstange einen Schwimmring (22) aufweist, der elastisch bezüglich des Körpers (20) zentriert ist.

2. Vorrichtung nach Anspruch 1, dadurch gekennzeichnet, daß der Ring (22) aus Kunststoff besteht.

3. Vorrichtung nach Anspruch 1 oder 2, dadurch gekennzeichnet, daß die Zentrierung mittels einer Feder (24) gewährleistet ist.

4. Vorrichtung nach Anspruch 3, dadurch gekennzeichnet, daß die Feder (24) durch einen Draht oder ein Metallblatt gebildet ist, das eine allgemein wellenförmige Gestalt annimmt, die sich von einer Außenwand des Rings (22) zu der Innenwand des Körpers (20) erstreckt.

5. Vorrichtung nach Anspruch 1 oder 2, dadurch gekennzeichnet, daß die Zentrierung mittels mehrerer Federn (24) gewährleistet ist, die jeweils durch einen Draht oder ein Metallblatt gebildet sind, das eine allgemein wellenförmige Gestalt annimmt, die sich von einer Außenwand des Rings (22) zu der Innenwand des Körpers (20) erstreckt.
